# EUROPÄISCHE PATENTSCHRIFT

(11) **EP 3 592 526 B1**
(45) Veröffentlichungstag und Bekanntmachung des Hinweises auf die Patenterteilung: **18.10.2023**
(21) Anmeldenummer: 18709343.0
(22) Anmeldetag: 06.03.2018
(51) Int. Cl.: E03C 1/02, E03C 1/04, F16L 11/15, F16L 33/00, F16L 33/28, F16L 33/34, B29C 48/09, B29C 48/13

(54) **DRUCKSCHLAUCH UND VERFAHREN ZUR HERSTELLUNG EINES DRUCKSCHLAUCHS**
PRESSURE HOSE AND METHOD FOR PRODUCING A PRESSURE HOSE
TUYAU À PRESSION ET PROCÉDÉ DE FABRICATION D'UN TUYAU À PRESSION

(30) Priorität: 10.03.2017 DE 102017002275
(43) Veröffentlichungstag der Anmeldung: 15.01.2020
(73) Patentinhaber: UNIWELL Rohrsysteme GmbH & Co. KG, 96106 Ebern (DE)
(72) Erfinder: MEYER, Hans-Peter, 58675 Hemer (DE)
(74) Vertreter: Von Rohr Patentanwälte Partnerschaft mbB
(86) Internationale Anmeldenummer: PCT/EP2018/055398
(87) Internationale Veröffentlichungsnummer: WO 2018/162441

(56) Entgegenhaltungen:
- EP-A1- 2 192 337
- EP-A1- 2 650 580
- EP-A2- 0 563 575
- WO-A1-01/83187
- WO-A2-03/035364
- CH-A5- 628 722
- DE-A1-102013 109 111
- DE-B3-102008 039 991
- US-A1- 2009 032 131

## Beschreibung

Die vorliegende Erfindung betrifft einen Druckschlauch für ein wasserführendes System zum Anschließen von Sanitärarmaturen mit einem vorzugsweise gewellten Innenschlauch aus Kunststoff, wobei wenigstens ein Schlauchende des Druckschlauches mit einem abweichend zum Innenschlauch ausgebildeten Anschlussstück zur Verbindung des Druckschlauches mit einem komplementär ausgebildeten Anschlussstück einer Sanitärarmatur versehen ist. Darüber hinaus betrifft die vorliegende Erfindung ein Verfahren zur Herstellung eines Druckschlauchs.

Im Rahmen der Installation wasserführender Systeme kommen Druckschläuche zum Einsatz. Ein Druckschlauch der eingangs genannten Art zum Einsatz im Sanitärbereich ist beispielsweise aus der EP 2 159 465 B1 bekannt. Der in dem vorgenannten Dokument beschriebene Druckschlauch weist einen Innenschlauch aus Kunststoff als wasserführendes fluiddichtes Medium und eine Ummantelung aus einem Geflecht zur Umsetzung einer druckstabilen Ausbildung auf. Darüber hinaus ist an einem Schlauchende ein separates Anschlussstück vorgesehen, das zur Verbindung mit einem komplementär ausgebildeten Anschlussstück der Sanitärarmatur ausgebildet ist. Zur kraftschlüssigen Verbindung des Druckschlauches mit dem Anschlussstück wird das entsprechende Schlauchende auf das Anschlussstück aufgepresst, wozu eine Presshülse verwendet wird. Die Presshülse wird dabei von außen auf die Ummantelung bzw. den Innenschlauch aufgepresst.

Nachteilig an dem aus der EP 2 159 465 B1 bekannten Druckschlauch ist, dass der Innenschlauch infolge des Pressvorgangs einer erheblichen radial nach innen gerichteten Druckkraft ausgesetzt ist, sodass der Innenschlauch im Verbindungsbereich mit dem Anschlussstück irreversibel zusammengedrückt wird, einhergehend mit einer Querschnittsverengung im Bereich des Anschlussstücks. Infolgedessen findet eine Beschleunigung des Wasserstroms bzw. eine Reduzierung des Wasserdrucks im Bereich des Anschlussstücks statt, sodass eine Wasserentnahme bei einem verringerten Wasserdruck möglich ist. Darüber hinaus ist die vorgenannte Querschnittsverengung im Bereich des Anschlussstücks bzw. des Schlauchendes mit einer Reduzierung der maximalen Durchflussmenge des Druckschlauches verbunden.

Die EP 2 650 580 A1 offenbart ein Anschlussstück, auf das ein gewelltes Schlauchende mittels einer Presshülle aufgepresst wird. Für einen verbesserten Halt ist das Anschlussstück gerippt ausgebildet.

Was das Material des Anschlussstücks anbelangt, so wird im Stand der Technik üblicherweise auf Metalllegierungen zurückgegriffen. In diesem Zusammenhang wird auf die DE 196 54 435 A1 verwiesen, aus der ein Druckschlauch mit einem aus Messing hergestellten Anschlussstück bekannt ist. Nachteilig an dieser Materialwahl sind die vergleichsweise hohen Rohstoffkosten, die sich negativ auf den Produktpreis und somit auf die Akzeptanz am Absatzmarkt auswirken. Zu berücksichtigen ist dabei, dass metallische Legierungen eine mitunter spekulative Geldanlage darstellen, einhergehend mit zum Teil erheblichen Preisschwankungen. Diese Preisinstabilität metallischer Rohstoffe wirkt sich auch negativ auf die Produktionskosten und letztlich den Produktpreis am Absatzmarkt aus.

Zusätzlich zu den vorgenannten wirtschaftlichen Nachteilen ist aus fertigungstechnischer Sicht zu beachten, dass Anschlussstücke aus metallischen Legierungen einer aufwendigen materialabtragenden Bearbeitung bedürfen. Zu berücksichtigen ist dabei, dass Sanitärarmaturen oftmals herstellerspezifische Anschlussstücke mit unterschiedlichen Anschlussgeometrien aufweisen. Entsprechend müssen auch die Anschlussstücke individuell an die herstellerspezifisch vorgegebenen komplementären Anschlussgeometrien angepasst werden, was zeit- und kostenintensiv ist.

Die EP 2 192 337 A1 betrifft ein flexibles Befüllrohr aus Kunststoff mit einem Wellrohrabschnitt vorgegebener Länge und einem an dessen einen Ende einstückig angeformten Trichters, insbesondere zum Befüllen des Vorratsbehälters einer Scheibenwaschanlage eines Fahrzeugs. Ferner wird auch ein Herstellungsverfahren beschrieben, wobei zunächst laufend ein Kunststoffrohr aus einem Extruder extrudiert, dies danach durch einen Corrugator geführt und so geformt wird, dass laufend in wechselseitiger Abfolge die Formung eines Wellrohrbereichs an diesen anschließend eines Trichter-Formteils, nach diesem wieder ein weitere Wellrohrbereich usw. erfolgt. Der so erhaltene Formstrang wird nach Durchlaufen des Corrugators aufgeschnitten, um so mehrere Befüllrohre zu erhalten.

Die DE 10 2013 109 111 A1 betrifft einen Schlauch mit mehreren Lumen und einer im Wesentlichen runden Basiswand, die sich von der Basiswand radial nach außen erstreckende Wellungen aufweist.

Die WO 03/035364 A2 betrifft die Herstellung einer verstärkten Muffe an einem extrudierten Kunststoffrohr aus thermoplastischem Kunststoff.

Die US 2009/032131 A1 betrifft einen flexibel kollabierbaren, gewellten Abwasserschlauch.

Vor diesem Hintergrund liegt daher der vorliegenden Erfindung die Aufgabe zugrunde, einen flexiblen Druckschlauch und ein Verfahren zur Herstellung eines Druckschlauches zur Verfügung zu stellen, wobei der Druckschlauch ein gegenüber dem Stand der Technik verbessertes Strömungsverhalten am Zu- und Auslauf aufweist und sich der Druckschlauch in einfacher Weise und kostengünstig fertigen lässt.

Die vorgenannte Aufgabe wird durch einen Druckschlauch mit den Merkmalen von Patentanspruch 1 und durch ein Verfahren zur Herstellung eines Druckschlauches mit den Merkmalen von Patentanspruch 9 gelöst. Vorteilhafte Weiterbildungen sind Gegenstand der Unteransprüche.

Der Grundgedanke des erfindungsgemäßen Druckschlauches besteht darin, dass der Innenschlauch und das Anschlussstück einstückig ausgebildet und durch Extrusion in einem gemeinsamen Extrusionsprozess hergestellt sind. Der erfindungsgemäße Druckschlauch kann durch Schneiden eines im Endlosverfahren durch Extrusion hergestellten Profilschlauchs erhalten werden, wobei der Profilschlauch beispielsweise gewellte Schlauchabschnitte aufweisen kann, die über weitere Schlauchabschnitte mit in Längsrichtung des Profilschlauchs abweichender Schlauchgeometrie miteinander verbunden sind. Die Schlauchgeometrie des weiteren Schlauchabschnitts kann abschnittsweise der Anschlussgeometrie eines Anschlussstücks des erfindungsgemäßen Druckschlauchs entsprechen. Besonders bevorzugt sind im Bereich des weiteren Schlauchabschnitts zwei in Längsrichtung des Profilschlauchs hintereinanderliegende und spiegelsymmetrisch zu einer quer zur Längsachse des Profilschlauchs verlaufenden Symmetrieachse angeordnete identische Anschlussgeometrien ausgebildet, so dass beim Ablängen bzw. Schneiden des Profilschlauchs entlang der Symmetrieachse zwei Schlauchabschnitte mit an den Enden ausgebildeten Anschlussstücken erhalten werden. Weiter bevorzugt ist eine Ausführungsform, bei der sich in Längsrichtung des Profilschlauchs bzw. in Extrusionsrichtung weitere Schlauchabschnitte mit erster Schlauchgeometrie und weitere Schlauchabschnitte mit zweiter Anschlussgeometrie abwechseln, wobei jeder weitere Schlauchabschnitt wiederrum eine von einem Wellenprofil abweichende Schlauchgeometrie aufweisen kann. Durch Ablängen des Profilschlauchs im vorzugsweise mittleren Bereich der weiteren Schlauchabschnitte werden so Schlauchabschnitte beispielsweise mit Wellenprofil erhalten, an deren Enden unterschiedliche Anschlussstücke ausgebildet sind.

Ein erster Schlauchabschnitt mit vorzugsweise Wellenprofil kann den Innenschlauch des erfindungsgemäßen Druckschlauchs ausbilden; weitere Schlauchabschnitte mit von der Wellenform abweichender Anschlussgeometrie können Anschlussstücke des erfindungsgemäßen Druckschlauchs ausbilden. Es können zweite Schlauchabschnitte und dritte Schlauchabschnitte mit vom ersten Schlauchabschnitt abweichender Anschlussgeometrie vorgesehen sein, wobei die zweiten Schlauchabschnitte und die dritten Schlauchabschnitte unterschiedliche Anschlussgeometrien aufweisen können, um unterschiedliche Anschlussstücke an den Enden eines Innenschlauchs auszubilden.

Der Verwendungszweck der vorliegenden Erfindung liegt dabei in der Installation von Sanitärarmaturen bzw. im Sanitärbereich. In diesem Zusammenhang ist unter dem Begriff "Sanitärarmatur", wie er im Rahmen der vorliegenden Erfindung verwendet wird, eine vorzugsweise fest installierte oder bewegliche konstruktive Einrichtung zu verstehen, die beispielsweise im Haushaltsbereich zur bedarfsweisen Wasserentnahme ausgebildet ist. Insofern ist der vorgenannte Begriff vorzugsweise breit zu verstehen. Beispiele für Sanitärarmaturen der eingangs genannten Art sind insbesondere ausgewählt aus der Gruppe der Waschtisch- und/oder Duscharmaturen und/oder ausgewählt aus der Gruppe der Küchenarmaturen, insbesondere Spültischarmaturen, und/oder ausgewählt aus der Gruppe der (Hand-) Brausen, insbesondere Duschbrausen und/oder Küchenbrausen. Darüber hinaus ist auch der Einsatz des erfindungsgemäßen Druckschlauches beispielsweise zur Wasserversorgung von Geschirrspül- und/oder Waschmaschinen möglich.

Darüber hinaus ist unter dem Begriff "Anschlussstück", wie er im Rahmen der vorliegenden Erfindung verwendet wird, vorzugsweise ein Verbindungsteil zum dichtenden Anschließen eines Schlauchendes des Druckschlauches an ein komplementär ausgebildetes Anschlussstück einer Sanitärarmatur und/oder eines Eckventils und/oder eines Teils des wasserführenden Systems zu verstehen. Dabei weist das Anschlussstück eine vorzugsweise herstellerspezifisch und/oder länderspezifisch und gegebenenfalls genormte ausgebildete Anschlussgeometrie auf, um eine passgenaue bzw. dichtende Verbindung mit dem komplementär ausgebildeten Anschlussstück (mit entsprechend komplementärer Anschlussgeometrie) zu gewährleisten.

Der Innenschlauch weist in axialer Richtung vorzugsweise eine wellenförmige Kontur auf. Die Wellenform ist dabei weiter vorzugsweise sinusförmig ausgebildet. Diese spezielle Wellenform begünstigt einen gleichmäßigen ungehinderten Wasserlauf durch den Innenschlauch. Des Weiteren wird durch die wellenförmige Ausgestaltung des Innenschlauchs die Flexibilität bzw. Biegsamkeit des Schlauches deutlich verbessert bzw. in Abhängigkeit vom Schlauchmaterial überhaupt erst ermöglicht.

Aufgrund der einstückigen Ausbildung des Innenschlauchs und des abweichend zum Innenschlauch ausgebildeten Anschlussstücks entfällt somit die im Stand der Technik vorgesehene - üblicherweise kraftschlüssige - Anbindung des Anschlussstücks an das Schlauchende des Druckschlauches. Damit verbundene Beeinträchtigungen in Bezug auf das Strömungsverhalten im Bereich des Anschlussstücks werden somit wirksam ausgeschlossen. Auf diese Weise werden entlang der gesamten Länge des Druckschlauches gleichmäßige Strömungsverhältnisse realisiert, wobei der maximale Strömungsquerschnitt auch im Bereich des Anschlussstücks zur Verfügung steht. Dies ist insbesondere bei vergleichsweise dünnwandig ausgebildeten Innenschläuchen, beispielsweise mit einer Wandstärke im Bereich von 1 mm, besonders vorteilhaft, da diese bei den aus dem Stand der Technik bekannten Druckschläuchen für den Sanitärbereich anfällig in Bezug auf eine Querschnittsverengung infolge des Verpressens sind. Überdies wird durch die einstückige Ausbildung des Innenschlauchs und des Anschlussstücks die Bildung von Leckagen ausgeschlossen.

Zudem ist herauszustellen, dass die einstückige Ausbildung des Innenschlauchs und des Anschlussstücks aus einem Kunststoffmaterial eine kostengünstige bzw. ressourcensparende Herstellung ermöglicht, die nicht den vorgenannten Preisschwankungen börsennotierter metallischer Legierungen bzw. Rohrstoffe unterworfen ist.

Was die einstückige Herstellung des Innenschlauchs und des Anschlussstücks anbelangt, so wird diese durch Extrusionstechnik erzielt. Auf diese Weise wird die kostengünstige Anbindung des Anschlussstücks bzw. Anschlussfittings an den Innenschlauch im Rahmen eines kontinuierlichen Fertigungsprozesses umgesetzt, was insbesondere im Rahmen der Serienproduktion vorteilhaft ist.

Generell sei angemerkt, dass die Anschlussgeometrie des erfindungsgemäß hergestellten Anschlussstücks qualitativ - beispielsweise in Bezug auf die Kontur- und/oder Passgenauigkeit sowie das Abdichtverhalten - mit den aus dem Stand der Technik bekannten separat ausgebildeten Anschlussstücken, beispielsweise aus Messing, vergleichbar ist. Insbesondere ist keine nachgeordnete formgebende bzw. materialabtragende Bearbeitung des Anschlussstücks notwendig, sodass der erfindungsgemäße Druckschlauch in weniger Arbeitsschritten erhältlich ist. Der Innenschlauch und das wenigstens eine Anschlussstück sind in lediglich einem Extrusionsprozess erhältlich.

Gemäß einer bevorzugten Ausführungsform ist vorgesehen, dass beide Schlauchenden mit unterschiedlich ausgebildeten Anschlussstücken versehen sind, wobei ein erstes Anschlussstück zur Verbindung eines ersten Schlauchendes mit einem komplementär ausgebildeten Anschlussstück einer Armatur, insbesondere Sanitär- und/oder Küchenarmatur, und ein zweites Anschlussstück zur Verbindung eines zweiten Schlauchendes mit einem komplementär ausgebildeten Anschlussstück einer Wasserversorgungsleitung, insbesondere eines Eckventils, ausgebildet ist. Insbesondere sind die Anschlussstücke unterschiedlich und/oder individuell im Hinblick auf die korrespondierenden Anschlussstücke bzw. Anschlussfittinge der Wasserversorgungsleitung einerseits und der Sanitärarmatur andererseits ausgebildet.

Zur druckfesten Ausbildung des Druckschlauches ist es bevorzugt, wenn der Innenschlauch im Wesentlichen über seine gesamte Länge von einer Ummantelung, vorzugsweise einem Metallgeflecht, besonders bevorzugt einem Edelstahlgeflecht, umgeben ist. Alternativ kann die Ummantelung auch aus einem Kunststoffgeflecht, insbesondere einem Polyestergeflecht, bestehen. Es versteht sich jedoch, dass das Anschlussstück nicht von der Ummantelung umgeben sein muss, um eine ungehinderte Verbindung des Anschlussstücks mit dem komplementär ausgebildeten Anschlussstück einer Sanitärarmatur und/oder einer Wasserversorgungsleitung zu ermöglichen.

Vorzugsweise ist vorgesehen, dass die Ummantelung an wenigstens einem Schlauchende von außen mittels eines Klemmelements, vorzugsweise einer Presshülse, auf den Innenschlauch aufgepresst ist. Die Presshülse sorgt dabei für eine sichere Verbindung zwischen dem Innenschlauch und der Ummantelung und bildet einen effektiven Knickschutz im Bereich des Schlauchendes.

Es ist zweckmäßig, wenn das Anschlussstück, insbesondere das erste Anschlussstück, umfangseitig wenigstens eine umlaufende Aufnahmenut zur Aufnahme eines Dichtungselements, insbesondere eines Dichtrings, aufweist. Auf diese Weise wird eine effektive umfangseitige Abdichtung insbesondere des ersten Anschlussstücks gegenüber dem komplementären Anschlussstück, insbesondere an der Sanitärarmatur, gewährleistet.

Bevorzugt ist vorgesehen, dass das Anschlussstück, insbesondere das zweite Anschlussstück, umfangseitig wenigstens eine radial vorspringende Schulter aufweist, vorzugsweise wobei die Schulter einen Axialanschlag für ein Spannelement, vorzugsweise eine Überwurfmutter, bildet. Vorzugsweise wird das zweite Anschlussstück mittels des Spannelements gegen ein komplementär ausgebildetes Anschlussstück eines Teils des wasserführenden Systems, insbesondere einer Wasserversorgungsleitung und/oder eines Eckventils, gespannt, indem das Spannelement auf einen komplementären Gewindeabschnitt aufgeschraubt ist.

Besonders bevorzugt kann das Anschlussstück, insbesondere das zweite Anschlussstück, stirnseitig einen umlaufenden Halte- und/oder Aufnahmebereich zum Halten und/oder zur Aufnahme eines Dichtungselements, insbesondere eines Dichtrings, aufweisen. Dies gestattet insbesondere eine effektive stirnseitige Abdichtung zwischen dem zweiten Anschlussstück und einem komplementär ausgebildeten Anschlussstück einer Wasserversorgungsleitung, beispielsweise eines Eckventils.

Um das Strömungsverhalten im Bereich des Anschlussstücks weiterführend zu verbessern, ist vorzugsweise vorgesehen, dass das Anschlussstück innenseitig in axialer Richtung zumindest bereichsweise, vorzugsweise vollständig, wellenfrei bzw. mit einer zylindrischen Innenkontur ausgebildet ist. Auf diese Weise wird innerhalb des erfindungsgemäßen Druckschlauches ein homogenes und/oder geräuscharmes Zu- und/oder Abfließen des Fluidstroms gewährleistet.

Bevorzugt ist, wenn das Anschlussstück zumindest bereichsweise, insbesondere in einem Übergangsbereich zum Innenschlauch, im Wesentlichen denselben Außendurchmesser wie der Inneschlauch aufweist. Auf diese Weise wird eine hohe Knickfestigkeit gewährleistet und/oder eine sichere Auflagefläche für das Klemmelement gebildet.

Im übrigen kann das Anschlusselement, insbesondere in einem Übergangsbereich zum Innenschlauch, einen größeren Innendurchmesser und/oder Strömungsquerschnitt als der Innenschlauch aufweisen. Dies gestattet einen optimalen Zu- und/oder Abfluss im Bereich der Schlauchenden.

Besonders bevorzugt ist der Druckschlauch für die Trinkwasserinstallation ausgebildet. Im Zusammenhang mit Anforderungen und Prüfungsrichtlinien für druckfeste und flexible Schlauchleitungen für die Trinkwasserinstallation wird insbesondere auf das Arbeitsblatt W 543 des deutschen Vereins des Gas- und Wasserfaches (DVGW) verwiesen, wobei die dortigen Anforderungen durch den erfindungsgemäßen Druckschlauch vorzugsweise vollumfänglich erfüllt werden. Weiter vorzugsweise erfüllt der erfindungsgemäße Druckschlauch vollumfänglich die Anforderungen der Norm DIN EN 13618.

Vorzugsweise ist das Material des Innenschlauchs bzw. des Anschlussstücks derart ausgewählt, dass der erfindungsgemäße Druckschlauch zum Leiten von Trinkwasser geeignet bzw. zugelassen ist. Hierbei darf auf die durch die Vereinigung Kunststoffe im Trinkwasser (KTW) aufgestellten Leitlinien verwiesen werden, wobei die Prüfung vorzugsweise gemäß Arbeitsblatt W 270 der DVGW erfolgt. Beispiele für Materialien des Innenschlauches sind vorzugsweise ausgewählt aus der Familie der Polyolefine, insbesondere Polypropylen und/oder Polyethylen.

Der erfindungsgemäße Druckschlauch ist vorzugsweise für einen Wasserdruck von wenigstens 0,5 bar, weiter vorzugsweise von wenigstens 2 bar, besonders bevorzugt von bis zu 40 bar oder mehr, ausgelegt.

Der Druckschlauch, insbesondere der Innenschlauch, weist vorzugsweise einen Innendurchmesser von wenigstens 5 mm, vorzugsweise von wenigstens 6 mm, besonders bevorzugt von wenigstens 7 mm und/oder von höchstens 15 mm, vorzugsweise von höchstens 10 mm, besonders bevorzugt von beispielsweise 8 mm auf.

Der Druckschlauch, insbesondere die Ummantelung, weist vorzugsweise einen Außendurchmesser von wenigstens 8 mm, vorzugsweise von wenigstens 9 mm, besonders bevorzugt von wenigstens 10 mm und/oder von höchstens 20 mm, vorzugsweise von höchstens 15 mm, beispielsweise von 13 mm auf.

Vorzugsweise ist der Druckschlauch dazu ausgebildet, Wasserströme mit einer Temperatur von bis zu 100 °C oder auch mehr, vorzugsweise von höchstens 90 °C, weiter vorzugsweise von höchstens 80 °C, besonders bevorzugt von höchstens 70 °C, zu leiten, was materialabhängig ist. Grundsätzlich können aber auch Materialien eingesetzt werden, die höhere Wassertemperaturen tolerieren.

Insbesondere weist der erfindungsgemäße Druckschlauch eine Zugfestigkeit nach 9.2 DIN EN 1113 von wenigstens 300 N, vorzugsweise von wenigstens 400 N, besonders bevorzugt von wenigstens 500 N, auf.

Vorzugsweise kann der Innenschlauch eine Wandstärke im Bereich von 0,5 mm bis 5 mm, vorzugsweise im Bereich von 0,6 mm bis 4 mm, bevorzugt im Bereich von 0,7 mm bis 3 mm, besonders bevorzugt im Bereich von 0,8 mm bis 2 mm, aufweisen.

Vorzugsweise wird als Material für den Innenschlauch und die Anschlussstücke Polyphenylsulfon (PPSU) verwendet. Dieses Material zeichnet sich insbesondere durch seine hohe Dauertemperaturbeständigkeit von deutlich mehr als 100 °C aus. Aufgrund der geringen Permeabilität für Wasser eignet sich dieser Kunststoff insbesondere für den Einsatz im Sanitär- und Armaturenbereich. PPSU ist aufgrund seiner hohen Härte als Metallersatz geeignet. Somit wird insbesondere für die Anschlussstücke eine hohe Formstabilität erreicht.

Aufgrund der hohen Härte von PPSU ist ein Schneiden des Materials durch Scherkräfte nur schwer möglich, weshalb das Material zum Trennen spanend, insbesondere sägend, bearbeitet werden kann.

Insbesondere ist die Härte von PPSU derart hoch, dass für eine ausreichend hohe Flexibilität des Druckschlauches eine wellenförmige Gestaltung, vorzugsweise sinusförmig, vorgesehen sein kann.

Bei geringeren Anforderungen an die Dauertemperaturbeständigkeit sowie die Festigkeit bzw. Druckstabilität des Druckschlauches können beispielsweise auch Materialien aus der Familie der Polyamide oder Polyolefine, insbesondere Polyamid 12, Polypropylen und/oder Polyethylen zur Herstellung des Druckschlauchs verwendet werden. Bei Einsatz von PPSU kann insbesondere auf das den Innennschlauch umgebende Edelstahlgewebe verzichtet werden, da die Druckstabilität des PPSU ausreichend hoch ist.

Ein weiterer Gegenstand der vorliegenden Erfindung betrifft ein Verfahren zur Herstellung eines Druckschlauchs für ein wasserführendes System zum Anschließen von Sanitär- und/oder Küchenarmaturen, wobei ein gewellter Innenschlauch und wenigstens ein Anschlussstück zur Verbindung des Druckschlauches mit einem komplementär ausgebildeten Anschlussstück einer Sanitärarmatur und/oder eines Teils des wasserführenden Systems einstückig und durch Extrusion in einem gemeinsamen Extrusionsprozess hergestellt werden. Auf diese Weise lassen sich die vorgenannten Vorteile entsprechend realisieren.

Eine kontinuierliche einstückige Herstellung eines Profilschlauchs mit in Längsrichtung des Schlauchs abwechselnd angeordneten ersten Schlauchabschnitten und die ersten Schlauchabschnitte miteinander verbindenden weiteren Schlauchabschnitten kann erfolgen unter Einsatz einer sogenannten "ständig laufenden Form", die aus mehreren, jeweils zweiteiligen Werkzeugpaaren, sogenannten Werkzeugbacken oder kurz Backen, besteht. Die Herstellung des erfindungsgemäßen Druckschlauchs kann dann durch Ablängen des Profilschlauchs jeweils im Bereich der weiteren Schlauchabschnitte erfolgen.

Die einzelnen Werkzeugbacken können mittels Ketten in Produktionsrichtung entlang einer Führung, beispielsweise einem Schienensystem, bewegt werden. In Produktionsrichtung vor der Austrittsdüse eines Extruders wird das jeweilige Backenpaar zusammengefahren, d.h. es wird eine in Produktionsrichtung offene rohrförmige Werkzeugeometrie gebildet. Das Backenpaar wandert dann mit Extrusionsgeschwindigkeit in Produktionsrichtung mit. Nach kurzer Zeit erreicht das Backenpaar die Austrittsdüse des Extruders. Ab diesem Zeitpunkt wird das Material in das Backenpaar extrudiert. Die Extrusionsdüse kann dabei im Inneren einen Dorn aufweisen, der eine schlauchförmige Förderung des Materials aus der Austrittsdüse des Extruders bewirkt. Im Inneren des Dorns kann eine Druckluftzufuhr ausgebildet sein, die bewirkt, dass das Material in den Werkzeugbacken gegen die Wand der Werkzeugbacken gedrückt wird, wodurch die Außen- und Innengeometrie des Profilschlauches gebildet wird. Alternativ können die Backenpaare Austrittsöffnungen aufweisen, über die ein Unterdruck im Inneren der Backenpaare erzeugt wird. Somit kann auch mit Hilfe eines Unterdrucks die Ausformung des Profilschlauches erfolgen.

Ist das erste Backenpaar weit genug in Produktionsrichtung vorgefahren, wird in Produktionsrichtung hinter dem ersten Backenpaar ein zweites Backenpaar zusammengefahren, so dass beide Backenpaare aneinander anliegen. Die beiden Backenpaare bilden somit ein Extrusionswerkzeug. Zu diesem Zeitpunkt wird das Material in das erste Backenpaar extrudiert, jedoch noch nicht in das zweite Backenpaar. Sobald die Geometrie des ersten Backenpaares vollständig mit Material gefüllt ist, sind die beiden Backenpaare so weit vorgefahren, dass ab diesem Zeitpunkt der Extruder das Material in das zweite Backenpaar fördern kann. Das erste Backenpaar fährt so lange in Produktionsrichtung mit dem Extrudat mit, bis das Material innerhalb des Backenpaares soweit abgekühlt ist, dass der Profilschlauch formfest ausgebildet ist und entformt werden kann. Anschließend kann das erste Backenpaar geöffnet werden, wobei beide Teile des ersten Backenpaares in jeweils gegensätzliche Richtungen vorzugsweise senkrecht zur Produktionsrichtung verfahren werden. Die einzelnen Backen werden über das Ketten- und/oder Schienensystem wieder zurück auf eine Position in Positionsrichtung vor die Austrittsdüse des Extruders gefahren. Das Backenpaar kann dann erneut bei der Schlauchextrusion eingesetzt werden. Die Backen bilden dabei vorzugsweise zwei sich senkrecht zur Produktionsrichtung gegenüberliegende Kreisläufe aus jeweils hintereinander anliegenden Backen.

Um eine optimale Ausformung des Profilschlauches sicherzustellen, kann ein Dichtstopfen in einem definierten Abstand in Produktionsrichtung vor der Austrittsdüse angeordnet sein. Durch den Dichtstopfen wird sichergestellt, dass zum Ausformen des Profilschlauchs ein ausreichend hoher Druck von der Druckluftzufuhr erzeugt wird. Alternativ dient der Dichtstopfen dazu, einen innerhalb der Backenpaare anliegenden Unterdruck über eine ausreichende Länge zur Ausformung des Profilschlauchs wirken zu lassen.

Durch unterschiedliche Innenkonturen der Backenpaare kann der Schlauch abschnittsweise unterschiedlich ausgebildet werden. Das erste Backenpaar kann dabei beispielsweise zumindest eine erste Anschlussgeometrie zum späteren Anschluss des erfindungsgemäßen Druckschlauchs an eine Sanitärarmatur vorgeben, während das zweite, anschließende Backenpaar einen beispielsweise gewellten Schlauchabschnitt des Profilschlauchs und damit zumindest einen Abschnitt eines Innenschlauchs bei dem erfindungsgemäßen Druckschlauch ausbildet. Ein drittes, weiter anschließendes Backenpaar kann beispielsweise ausgebildet sein wie das zweite Backenpaar und wiederum einen beispielsweise gewellten Schlauchabschnitt des Profilschlauchs ausbilden. Durch die Veränderung der Anzahl der anschließenden zweiten Backenpaare lässt sich so in einfacher Weise die Länge des durch Extrusion hergestellten gewellten Schlauchabschnitts und damit die Länge des Innenschlauchs vorgeben. Alternativ kann das dritte Backenpaar auch zumindest eine zweite, andere Anschlussgeometrie des Profilschlauches ausbilden. Auf diese Weise kann ein Profilschlauch mit abschnittsweise sich ändernder Schlauchgeometrie erzeugt werden, wobei erste Schlauchabschnitte mit beispielsweise Wellenprofil über weitere Schlauchabschnitte voneinander getrennt sein können, wobei die weiteren Schlauchabschnitte gleiche oder unterschiedliche Anschlussgeometrien aufweisen. Vorzugsweise weist jeder weitere Schlauchabschnitt zwei spiegelsymmetrisch zu einer quer zur Längsachse des Profilschlauchs verlaufenden Symmetrieachse angeordnete Anschlussgeometrien auf. Durch Trennen des Profilschlauchs im Bereich einer Symmetrieachse werden zwei (erste) Schlauchabschnitte erhalten, die an den Enden eine gleiche Anschlussgeometrie aufweisen. Der erste Schlauchabschnitt bildet dann den Innenschlauch des erfindungsgemäßen Druckschlauchs, während die Anschlussgeometrien an den Enden des ersten Schlauchabschnitts die Anschlussstücke des Druckschlauchs ausbilden.

Im Anschluss an eine weitergehende Kühlung in Produktionsrichtung hinter den mitlaufenden Formbacken, die beispielsweise mit Hilfe eines Wasserbades vollzogen wird, kann der Profilschlauch mit einer Länge von beispielsweise 500 bis 700 m auf eine Rolle aufgewickelt werden, wodurch ein anschließender Transport vereinfacht werden kann. Alternativ kann der Profilschlauch im Anschluss an die Kühlung im Bereich der weiteren Schlauchabschnitte abgelängt und die so erhältlichen erfindungsgemäßen Druckschläuche können dann einzeln aufgerollt oder verpackt werden.

Es ist vorteilhafter, wenn alle Backenpaare gleich lang sind. Ein entsprechendes Schienensystem zum Führen und Leiten der Backen kann auch einzelne "Wartepositionen" für die Backen aufweisen bzw. es können Backen ausgetauscht werden, so dass bei Bedarf unterschiedliche Anschlussgeometrien oder Schläuche mit unterschiedlichen Längen hergestellt werden können.

Auf diese Weise lassen sich erfindungsgemäße Druckschläuche in einer Produktionsstraße individuell mit unterschiedlichen Längen fertigen. Dafür ist nicht wie bei den aus dem Stand der Technik bekannten Verfahren ein aufwendiges Umrüsten eines Blaswerkzeuges oder Spritzgießwerkzeuges notwendig. Bei aus dem Stand der Technik bekannten Verfahren sind Grenzen bei der Größe der herzustellenden Druckschläuche verfahrensbedingt vorgegeben. Erfindungsgemäß können durch die vorangehend beschriebene Extrusion beliebig lange Druckschläuche hergestellt werden. So ist auch eine Herstellung von Schläuchen von bis zu 3 m Länge oder auch mehr problemlos möglich.

Erstmals sieht die Erfindung insbesondere vor, einen Druckschlauch bestehend aus PPSU für den Sanitärbereich mit den erforderlichen Anschlussstücken einstückig in einem gemeinsamen Extrusionsprozess herzustellen. Aufgrund der hohen Druckbeständigkeit von PPSU kann auch gegebenenfalls auf eine Ummantelung des Druckschlauchs mit einem Metallgeflecht verzichtet werden.

Bei Einsatz von PPSU als Werkstoff für den Profilschlauch können die Backen aufgrund der hohen Verarbeitungstemperatur des Materials auf eine Temperatur von ca. 250 °C bis 300 °C aufgeheizt werden. So lassen sich ausgezeichnete Materialeigenschaften des erfindungsgemäßen Druckschlauchs gewährleisten.

Weitere Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Die beschriebenen und/oder gezeigten Vorteile, Merkmale, Eigenschaften und Aspekte der vorliegenden Erfindung lassen sich bedarfsweise miteinander kombinieren, auch wenn diese nicht im Einzelnen beschrieben oder gezeigt sind. Angegebene Wertebereiche umfassen alle ganzzahligen Zwischenwerte.

In der Zeichnung zeigt:
- Fig. 1: eine Seitenansicht eines erfindungsgemäßen Druckschlauches gemäß einer ersten Ausführungsform,
- Fig. 2: einen schematischen Längsschnitt des in Fig. 1 gezeigten Druckschlauches,
- Fig. 3: einen vergrößerten Ausschnitt aus Fig. 2 im Bereich eines ersten Schlauchendes des erfindungsgemäßen Druckschlauches,
- Fig. 4: einen weiteren vergrößerten Ausschnitt aus Fig. 2 im Bereich eines zweiten Schlauchendes des erfindungsgemäßen Druckschlauches,
- Fig. 5: eine Seitenansicht des erfindungsgemäßen Druckschlauches gemäß einer zweiten Ausführungsform;
- Fig. 6: einen schematischen Längsschnitt des in Fig. 5 gezeigten erfindungsgemäßen Druckschlauches;
- Fig. 7: einen vergrößerten Ausschnitt aus Fig. 6 im Bereich des ersten Schlauchendes des Druckschlauches;
- Fig. 8: eine Seitenansicht eines durch Extrusion in einem Endlos-Verfahren hergestellten Profilschlauchs mit in Längsrichtung des Profilschlauchs abwechselnd angeordneten ersten, wellenförmigen Schlauchabschnitten und weiteren Schlauchabschnitten, die die Anschlussgeometrien zum Anschluss an eine Sanitärarmatur ausbilden;
- Fig. 9: eine Seitenansicht eines erfindungsgemäßen Druckschlauches gemäß einer dritten Ausführungsform und
- Fig. 10: eine schematische Darstellung einer Vorrichtung zur Durchführung eines Extrusionsprozesses zur Herstellung eines Profilschlauchs der in Fig. 8 gezeigten Art.

Bei der nachfolgenden Beschreibung werden für gleiche und gleichartige Bauteile und Komponenten dieselben Bezugszeichen verwendet, wobei sich entsprechende Eigenschaften und Merkmale ergeben, auch wenn keine wiederholte Beschreibung erfolgt.

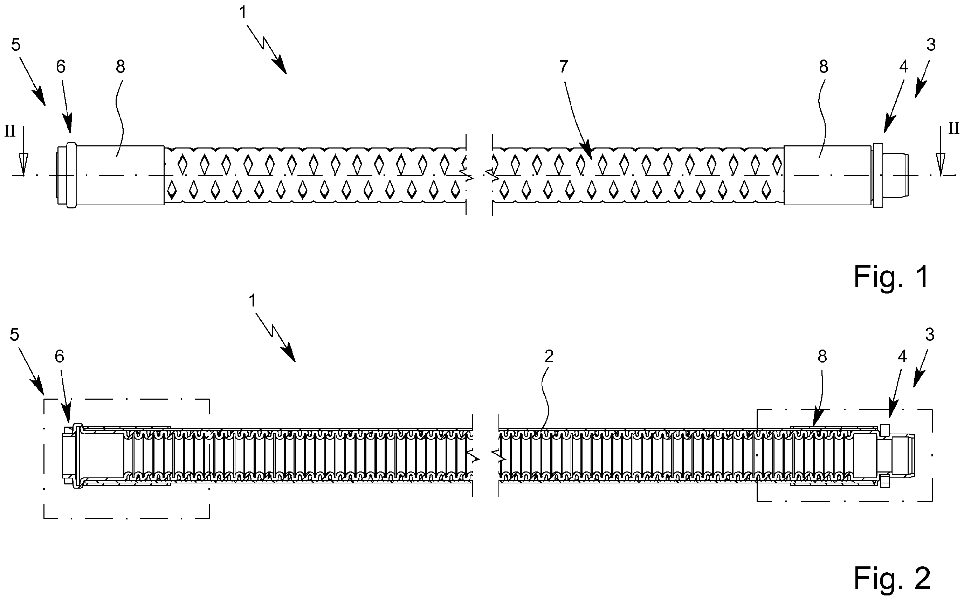

Fig. 1 zeigt in einer schematischen Seitenansicht einen erfindungsgemäßen Druckschlauch 1 für ein (nicht dargestelltes) wasserführendes System. Insbesondere ist der Druckschlauch 1 zum Anschließen von Sanitärarmaturen an eine Wasserversorgungsleitung, insbesondere ein Eckventil, ausgebildet.

Fig. 2 zeigt einen schematischen Längsschnitt des erfindungsgemäßen Druckschlauches 1 gemäß Fig. 1.

Der Druckschlauch 1 weist einen gewellten Innenschlauch 2 zur Führung eines Wasserstroms, insbesondere eines Trinkwasserstroms, auf.

Wie sich insbesondere aus Fig. 2 ergibt, ist an einem ersten Schlauchende 3 des Druckschlauches 1 ein erstes Anschlussstück 4 und an einem zweiten Schlauchende 5 ein zweites Anschlussstück 6 ausgebildet bzw. ausgeformt. Dabei ist das erste Anschlussstück 4 zur Verbindung des ersten Schlauchendes 3 mit einem komplementär ausgebildeten Anschlussstück einer Sanitärarmatur und das zweite Anschlussstück 6 zur Verbindung des zweiten Schlauchendes 5 mit einem komplementär ausgebildeten Anschlussstück einer Wasserversorgungsleitung, insbesondere eines Eckventils, ausgebildet.

Erfindungsgemäß sind der Innenschlauch 2 und die Anschlussstücke 4, 6 einstückig, vorzugsweise mittels Extrusion, hergestellt.

Um eine druckfeste Ausbildung des erfindungsgemäßen Druckschlauchs 1 zu gewährleisten, ist eine Ummantelung 7, insbesondere ein Edelstahl- oder Polyestergeflecht, vorgesehen. Die Ummantelung 7 erstreckt sich beim dargestellten Ausführungsbeispiel über die gesamte Länge des Innenschlauches 2 und erstreckt sich auch zum Teil über die Anschlussstücke 4, 6. Verbindungsabschnitte an den Anschlussstücken 4, 6, mit denen die Anschlussstücke 4, 6 dichtend an komplementäre Anschlusstücke einer Sanitärarmatur und/der an Teile einer Wasserversorgungsleitung anschließbar sind, sind bewußt nicht von der Ummantelung 7 umgeben. Dies vereinfacht die Montage des Druckschlauches 1 an Teile des wasserführenden Systems.

Zur vorzugsweise kraftschlüssigen Verbindung der Ummantelung 7 mit dem Innenschlauch 2 und den Anschlusstücken 4, 6 ist an jedem Schlauchende 3, 5 ein Klemmelement 8 in Form einer Presshülse vorgesehen. Die Klemmelemente 8 pressen die Ummantelung 7 umfangseitig gegen den Innenschlauch 2 und gegen die Anschlusstücke 4, 6. Hierbei geht es lediglich darum, die Ummantelung 7 zu befestigen, und nicht, wie im Stand der Technik, Innenschlauch 2 und Anschlusstücken 4, 6 miteinander zu verbinden.

Es kommt vorzugsweise zu keiner Querschnittsverengung im Bereich des Übergangs zwischen dem Innenschlauch 2 und Anschlusstücken 4, 6, so dass eine Beeinträchtigung des Strömungsverhaltens in diesem Bereich nicht auftritt.

Nicht dargestellt ist, dass die Klemmelemente 8 auch mehrteilig, beispielsweise in Form von zwei Halbschalen, ausgebildet sein können. Darüber hinaus können die Klemmelemente 8 auch jeweils als Wicklung, vorzugsweise Metallwicklung, im Bereich der Schlauchenden 3, 5 vorgesehen sein.

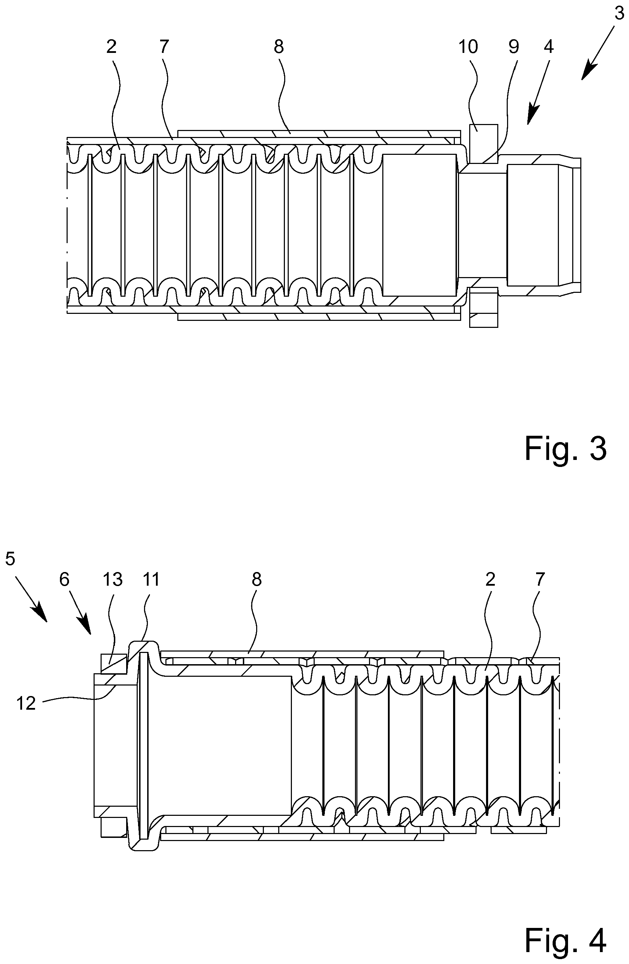

Nachfolgend wird anhand der Fig. 3 und 4 auf die Ausbildung der Anschlussstücke 4, 6 näher eingegangen.

Die Anschlussstücke 4, 6 sind beim dargestellten Ausführungsbeispiel vollständig wellenfrei mit zylindrischer Innenkontur ausgebildet. Der Innendurchmesser der Anschlussstücke 4, 6 kann sich dabei in axialer Richtung ändern.

Insbesondere bilden die Anschlussstücke 4, 6 eine wellenfreie Verlängerung des Innenschlauches 2, wobei der Außendurchmesser der Anschlussstücke 4, 6 angrenzend zum Innenschlauch 2 im Wesentlichen denselben Außendurchmesser wie der Innenschlauch 2 aufweist. Auf diese Weise wird eine sichere Auflage und/oder Verpressung der Umhüllung 7 mittels des Klemmelements 8 und somit eine knickfreie Ausbildung ermöglicht.

Darüber hinaus weisen die Anschlussstücke 4, 6 angrenzend zum Innenschlauch 2 einen größeren Innendurchmesser als der Innenschlauch 2 auf, sodass eine Erweiterung des Strömungsquerschnitts am Übergang vom Innenschlauch 2 zu den Anschlussstücken 4, 6 gebildet ist.

In Fig. 3 ist in einer ersten ausschnittsweisen Vergrößerung das erste Anschlussstück 4 im Bereich des ersten Schlauchendes 3 dargestellt. Das erste Anschlussstück 4 ist vorzugsweise zur Verbindung mit einem komplementär ausgebildeten Anschlussstück einer (nicht dargestellten) Sanitärarmatur ausgebildet. Das erste Anschlussstück 4 ist vorzugsweise derart ausgebildet, dass es vorzugsweise vollständig axial in die Sanitärarmatur einführbar ist, wobei das Klemmelement 8 einen Einführanschlag für das erste Anschlussstück 4 bilden kann. Darüber hinaus weist das erste Anschlussstück 4 umfangseitig eine umlaufende Aufnahmenut 9 zur Aufnahme eines Dichtungselements 10 auf. Beim dargestellten Ausführungsbeispiel ist das Dichtungselement 10 als Dichtungsring mit einem rechteckigen Querschnitt ausgebildet.

In Fig. 4 ist in einer zweiten ausschnittsweisen Vergrößerung das zweite Anschlussstück 6 im Bereich des zweiten Schlauchendes 5 dargestellt. Das zweite Anschlussstück 6 ist vorzugsweise zur Verbindung mit einem komplementär ausgebildeten Anschlussstück einer Wasserversorgungsleitung, beispielsweise eines Eckventils, ausgebildet. Beim dargestellten Ausführungsbeispiel wird das zweite Anschlussstück 6 mittels eines (nicht dargestellten) Spannelements, wie einer Überwurfmutter, gegen das komplementär ausgebildete Anschlussstück gespannt, wobei das Spannelement auf ein Außengewinde des komplementär ausgebildeten Anschlussstücks aufgeschraubt werden kann. Es versteht sich jedoch, dass auch zur Befestigung des ersten Anschlussstücks 4 mit dem komplementär ausgebildeten Anschlussstück ein entsprechendes Spannelement, insbesondere eine Überwurfmutter, vorgesehen sein kann.

Das Spannelement kann auch Teil des Druckschlauchs 1 und an diesem unverlierbar gehalten sein.

Das zweite Anschlussstück 6 weist umfangseitig eine radial vorspringende Schulter 11 auf, die insbesondere ein Widerlager und/oder einen axialen Anschlag für das Spannelement und/oder das Klemmelement 8 bildet. Auf diese Weise werden eine sichere Anbindung des zweiten Schlauchendes 5 und ein kompakter Aufbau ermöglicht.

Zur stirnseitigen Abdichtung des zweiten Schlauchendes 7 weist das zweite Anschlussstück 6 stirnseitig einen radial umlaufenden Haltebereich und/oder Aufnahmebereich 12 zum Halten und/oder zur Aufnahme eines Dichtungselements 13, vorzugsweise eine Dichtungsrings, auf. Das Dichtungselement 13 ist bis zur Schulter 11 auf den Aufnahmebereich 12 aufschiebbar und/oder aufsteckbar. Bevorzugt weist das zweite Anschlussstück 6 im Bereich des Aufnahmebereichs 12 einen größeren Innendurchmesser und/oder Strömungsquerschnitt als der Innenschlauch 2 auf.

Dadurch wird ermöglicht, dass das zweite Schlauchende 7 über die Schulter 11 mittels des Spannelements gegen das komplementäre Anschlussstück spannbar ist, insbesondere wobei das Dichtungselement 13 eine zuverlässige stirnseitige Abdichtung gewährleistet.

Nachfolgend wird auf eine weitere, zweite Ausführungsform des erfindungsgemäßen Druckschlauches 1 eingegangen, wobei die bisherigen Erläuterungen insbesondere entsprechend oder ergänzend gelten, auch wenn eine wiederholte Beschreibung nicht erfolgt.

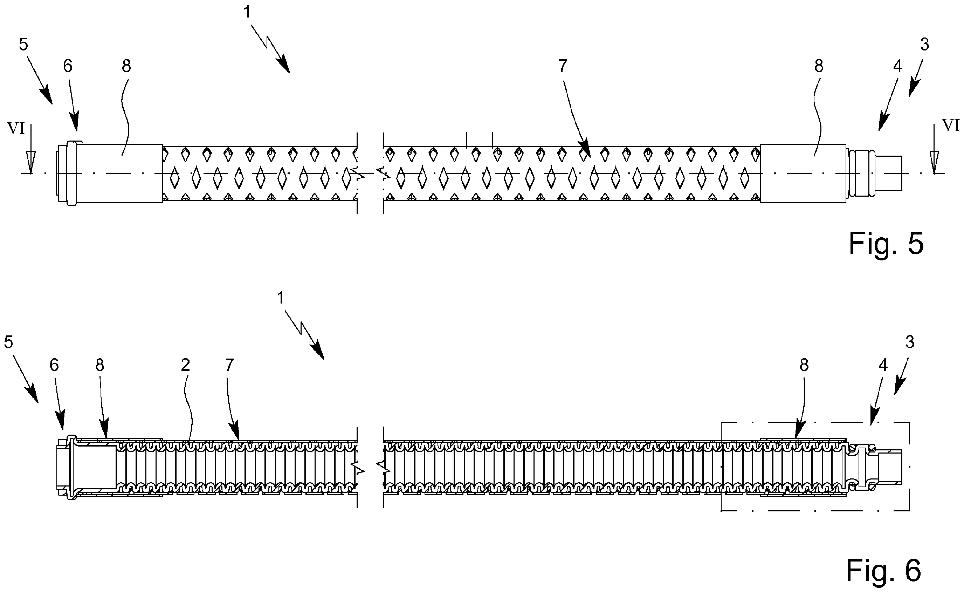

Fig. 5 zeigt in einer schematischen Seitenansicht einen erfindungsgemäßen Druckschlauch 1 gemäß der zweiten Ausführungsform. Fig. 6 zeigt einen schematischen Längsschnitt des in Fig. 5 gezeigten erfindungsgemäßen Druckschlauches 1.

Die zweite Ausführungsform des erfindungsgemäßen Druckschlauchs 1 unterscheidet sich von der ersten Ausführungsform insbesondere hinsichtlich der Ausbildung des ersten Anschlussstücks 4, wohingegen das zweite Anschlussstück 6 in beiden Ausführungsformen im Wesentlichen gleich ausgebildet ist. Es versteht sich jedoch, dass auch das erste Anschlussstück 6 im Sinne der erfindungsgemäßen Lösung hersteller- und/oder länderspezifisch angepasst sein kann.

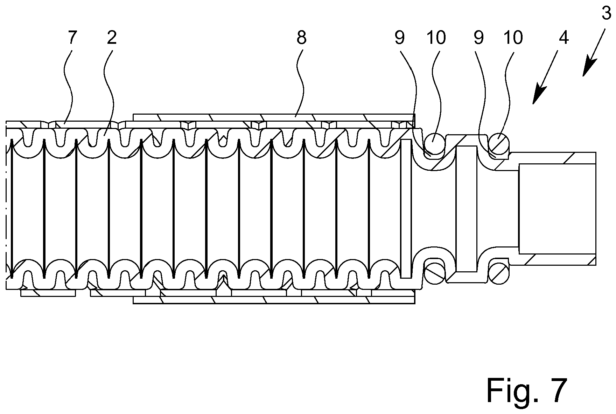

Fig. 7 zeigt in einer ausschnittsweisen Vergrößerung das erste Anschlussstück 4 im Bereich des ersten Schlauchendes 3. Bei dieser Variante weist das erste Anschlussstück 4 umfangseitig zwei umlaufende Aufnahmenuten 9 auf, wobei in jeder Aufnahmenut 9 ein als O-Ring ausgebildetes Dichtungselement 10 aufgenommen ist. Die Dichtungselemente 10 sind in axialer Richtung versetzt zueinander angeordnet.

Beim dargestellten Ausführungsbeispiel weist das erste Anschlussstück 4 gegenüber dem Innenschlauch 2 einen geringen Außendurchmesser und einen geringeren Innendurchmesser und/oder Strömungsquerschnitt auf. Dabei kann das Klemmelement 8 einen Einführanschlag bilden. Dies erleichtert das Einschieben des ersten Schlauchendes 3 in ein komplementäres Anschlussstück.

Es versteht sich, dass die Dimensionierung und/oder Formgebung bzw. Gestaltung der Anschlussstücke von den in den Figuren gezeigten Ausführungsformen abweichen können und dass die gezeigten Ausführungsformen insoweit lediglich exemplarischer Natur sind.

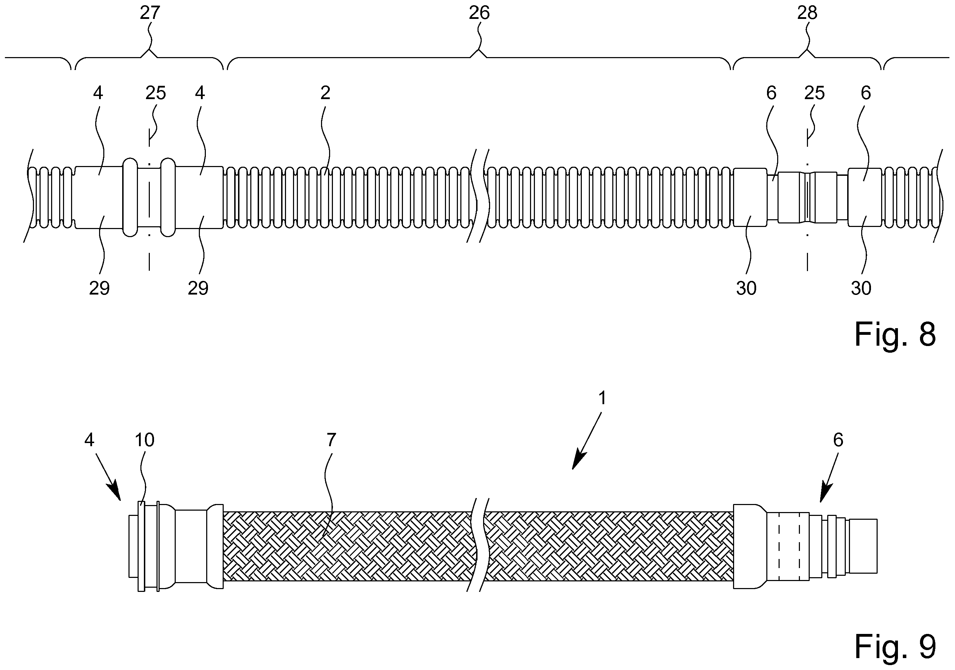

In Fig. 8 ist eine Seitenansicht eines durch Endlos-Extrusion hergestellten Profilschlauchs gezeigt mit in Längsrichtung des Profilschlauchs abwechselnd angeordneten ersten, wellenförmigen Schlauchabschnitten 26 und weiteren Schlauchabschnitten 27 und 28, die die Anschlussgeometrien zum Anschluss an eine Sanitärarmatur ausbilden. Die in Fig. 8 dargestellten strichpunktierten Linien kennzeichnen jeweils eine Trennebene 25, an denen der Profilschlauch abgelängt werden kann. Jeder weitere Schlauchabschnitt 27, 28 weist zwei in Längsrichtung des Profilschlauchs hintereinanderliegende und spiegelsymmetrisch zur Trennebene 25 angeordnete Anschlussgeometrie-Abschnitte 29, 30 auf, so dass beim Ablängen des Profilschlauchs entlang der jeweiligen Trennebene 25 zwei Schlauchabschnitte mit an den Enden ausgebildeten Anschlussstücken 4, 6 erhalten werden. Somit erhält man einzelne wellenförmige Innenschläuche 2, wobei jeder Innenschlauch 2 an beiden Enden mit jeweils einem Anschlussstück 4 und 6 einstückig verbunden ist. Das Ablängen kann spanend, beispielsweise mittels Sägen, erfolgen.

Fig. 9 zeigt eine Seitenansicht des erfindungsgemäßen Druckschlauches gemäß einer dritten Ausführungsform. Der Druckschlauch 1 weist eine Ummantelung 7, zwei verschiedenen Anschlussstücke 4,6 und ein Dichtungselement 10 auf.

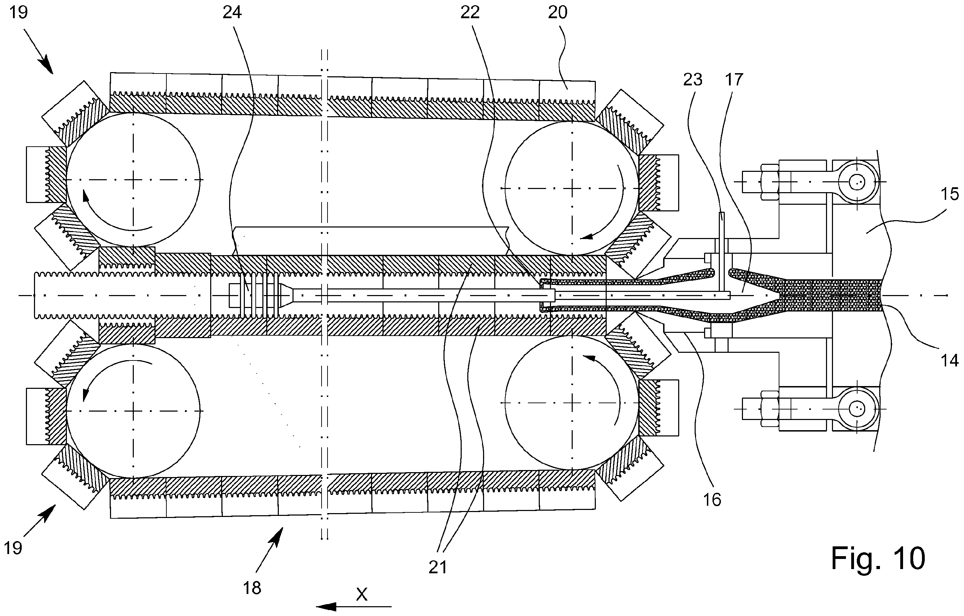

Fig. 10 zeigt eine schematische Darstellung einer Vorrichtung zur Durchführung eines Extrusionsprozesses zur Herstellung eines Profilschlauchs der in Fig. 8 gezeigten Art. Das schmelzeförmige Material 14 wird von einem Extruder 15 durch eine Düse 16 gefördert. Im Inneren der Düse 16 ist ein Dorn 17 angeordnet. Der Dorn 17 bewirkt, dass das schmelzeförmige Material 14 die Düse 16 als rohrförmiges Extrudat verlässt.

Das schmelzeförmige Material 14 wird von der Düse 16 des Extruders 15 in einen sogenannten Corrugator 18 gefördert. Der Corrugator 18 besteht aus zwei sich gegenüberliegenden Werkzeugkreislaufsystemen 19. Beide Werkzeugkrauslaufsysteme 19 bilden jeweils einen Kreislauf von einzelnen Werkzeugteilen, sogenannten Backen 20. Vorzugsweise weisen beide Werkzeugkreislaufsysteme 19 eine gleiche Anzahl von Backen 20 auf. Jeweils eine Backe 20 eines Werkzeugkreislaufsystems 19 bildet mit einer Backe 20 des anderen Werkzeugkreislaufsystems 19 ein Backenpaar 21. Gegenüberliegende Backen 20 werden in Transportrichtung X vor dem Austritt 22 des Materials 14 aus der Düse 16 zusammengefahren, wodurch ein Backenpaar 21 ausgebildet wird. Somit wird eine Startposition des Backenpaares 21 definiert.

Ist ein Backenpaar 21 in Produktionsrichtung X vor dem Austritt 22 des Materials 14 aus der Düse 16 des Extruders 15 gerade zusammengefahren worden, so wird in dieses Backenpaar 21 noch kein Material gefördert. Die Backenpaare 21 werden mit Produktionsgeschwindigkeit bzw. Extrusionsgeschwindigkeit in Transportrichtung X gefördert. Erreicht ein erstes Backenpaar 21 den Austritt 22 der Düse 16, so wird ab diesem Zeitpunkt Material in das erste Backenpaar 21 gefördert. In Produktionsrichtung X hinter dem ersten Backenpaar 21 wird ein zweites Backenpaar 21 an der Startposition zusammengefahren und steht damit dem Extrusionsprozess zur Verfügung. Die beiden hintereinander angeordneten Backenpaare 21 liegen fest, ohne Ausbildung eines Zwischenraums, aneinander an und bilden gemeinsam ein sich in Produktionsrichtung X erstreckendes Extrusionswerkzeug aus. Erreicht das hinter dem ersten Backenpaar 21 angeordnete weitere Backenpaar 21 den Austrittsbereich 22 der Düse 16, so wird ab diesem Zeitpunkt das Material 14 in das zweite Backenpaar 21 gefördert. In Produktionsrichtung X hinter dem zweiten Backenpaar 21 kann ein weiteres, drittes Backenpaar 21 an der Startposition zusammengefahren werden und an dem zweiten Backenpaar 21 ohne Bildung eines Zwischenspalts anliegen. Hierdurch wird ein in Produktionsrichtung X mitlaufendes Extrusionswerkzeug bestehend aus einer Vielzahl von in Produktionsrichtung X hintereinanderliegenden Backenpaaren 21 gebildet.

Die Backenpaare 21 können dabei unterschiedliche Innengeometrien aufweisen. So kann ein erstes Backenpaar 21 beispielsweise die Außengeometrie eines weiteren Schlauchabschnittes 27 bilden und ein zweites Backenpaar 21 die Außengeometrie eines ersten Schlauchabschnittes 26 (vgl. Fig. 8). Ein drittes Backenpaar 21 kann die Außengeometrie eines weiteren Schlauchabschnittes 28 (vgl. Fig. 8) bilden, wodurch ein Profilschlauch mit zwei verschiedenen Anschlussgeometrien erhalten wird. Im Anschluss kann an diesen Profilschlauch direkt die Geometrie eines ersten Schlauchabschnittes 26 (Fig. 8) mit Hilfe eines vierten Backenpaares 21 extrudiert werden. Somit entsteht ein Profilschlauch, bestehend aus alternierend angeordneten ersten Schlauchabschnitten 26 und weiteren Schlauchabschnitten 27, 28. Auf diese Weise kann ein quasi-endloser Profilschlauch, wie in Fig. 8 gezeigt, geformt werden.

Ist das in ein Backenpaar 21 extrudierte Material 14 soweit abgekühlt, dass das Formteil, also der Abschnitt des Profilschlauchs, formstabil vorliegt, kann das entsprechende Backenpaar 21 geöffnet werden. Dafür werden die einzelnen Backen 20 der jeweiligen Werkzeugkreislaufsysteme 19 senkrecht zur Transportrichtung X, vorzugsweise in entgegengesetzte Richtungen, bewegt. Anschließend können die einzelnen Backen 20 entgegen der Transportrichtung X zum definierten Startpunkt zurück transportiert werden, nämlich zu einer Position vor dem Austritt 22 der Düse. Die Backen 20 können dann wieder zu einem Backenpaar 21 zusammengefahren werden und können dann erneut extrudiertes Material 14 aufnehmen und ausformen. Die Bewegung der Backen 20 bzw. der Backenpaare 21 kann mithilfe eines Transportsystems, beispielsweise mit einem Kettenantrieb und/oder einem Schienensystem erfolgen.

Der Dorn 17 kann eine Druckluftzufuhr 23 aufweisen, über den mittels eines Drucckanals Druckluft zugeführt werden kann zur Erzeugung eines Überdrucks innerhalb der geschlossenen Backenpaare 21, in die das Material 14 gefördert wird. Ein Dichtstopfen 24 kann in Transportrichtung X beabstandet zum Austritt 22 der Düse 16 angeordnet sein. Der Dichtstopfen 24 bewirkt, dass der Überdruck über eine definierte Anzahl von Backenpaaren 21, d.h. über eine definierte Länge, wirken kann. Der Überdruck bewirkt, dass das Material 14 gegen die Innenkontur der Backenpaare 21 gedrückt wird, wodurch die Kontur des Profilschlauchs innerhalb der Backenpaare 21 ausgebildet wird. Alternativ kann auch über die Backen 20 ein Unterdruck erzeugt werden, der ebenfalls bewirkt, dass das Material 14 gegen die Innenkontur der Backen 20 gedrückt wird.

Je nach verwendetem Material kann es notwendig sein, die Backen 20 auf einer definierten Temperatur zu halten. Dafür kann ein Kühl- und/oder ein Heizsystem notwendig sein. Bei der Verwendung von PPSU als Material 14 ist es vorteilhaft, wenn die Backen 20 auf eine Temperatur von ca. 250 bis 300°C beheizt werden. Bei anderen Materialien kann eine Temperierung der Backen nicht notwendig oder eine Kühlung der Backen vorteilhaft sein.

Im Anschluss an den Corrugator 18 kann eine nicht dargestellte Kühleinrichtung vorgesehen sein, die den Profilschlauch weiter abkühlt, beispielsweise mit Hilfe eines Wasserbades. Ist der Profilschlauch ausreichend abgekühlt, kann der Profilschlauch auf Rollen von bis zu 500 bis 700 m oder auch mehr aufgerollt werde. Alternativ ist es auch möglich, den Profilschlauch an den Trennebenen 25 aufzutrennen und die so erhältlichen Innenschläuche 2, die an ihren Enden jeweils einstückig mit Anschlussstücken 4 und 6 verbunden sind, einzeln aufzurollen, zu verpacken oder direkt weiter zu verarbeiten.

### Bezugszeichenliste:

- 1: Druckschlauch
- 2: Innenschlauch
- 3: Schlauchende
- 4: Anschlussstück
- 5: Schlauchende
- 6: Anschlussstück
- 7: Ummantelung
- 8: Klemmelement
- 9: Aufnahmenut
- 10: Dichtungselement
- 11: Schulter
- 12: Aufnahmebereich
- 13: Dichtungselement
- 14: Material
- 15: Extruder
- 16: Düse
- 17: Dorn
- 18: Corrugator
- 19: Werkzeugkreislaufsystem
- 20: Backe
- 21: Backenpaar
- 22: Austritt
- 23: Druckluftzufuhr
- 24: Dichtstopfen
- 25: Symmentrieachse
- 26: Schlauchabschnitt
- 27: Schlauchabschnitt
- 28: Schlauchabschnitt

## Patentansprüche

1. Druckschlauch (1) für ein wasserführendes System zum Anschließen von Sanitärarmaturen mit einem vorzugsweise gewellten Innenschlauch (2) aus Kunststoff, wobei wenigstens ein Schlauchende (3, 5) des Druckschlauches (1) mit einem abweichend zum Innenschlauch (2) ausgebildeten Anschlussstück (4, 6) zur Verbindung des Druckschlauches (1) mit einem komplementär ausgebildeten Anschlussstück einer Sanitärarmatur versehen ist, **dadurch gekennzeichnet, dass** der Innenschlauch (2) und das Anschlussstück (4, 6) einstückig ausgebildet und durch Extrusion in einem gemeinsamen Extrusionsprozess hergestellt sind.

2. Druckschlauch (1) nach Anspruch 1, **dadurch gekennzeichnet, dass** beide Schlauchenden (3, 5) mit unterschiedlich ausgebildeten Anschlussstücken (4, 6) versehen sind, wobei ein erstes Anschlussstück (4) zur Verbindung eines ersten Schlauchendes (3) mit einem komplementär ausgebildeten Anschlussstück einer Armatur, insbesondere Sanitär- und/oder Küchenarmatur, und ein zweites, vorzugsweise anders ausgebildetes, Anschlussstück (6) zur Verbindung eines zweiten Schlauchendes (5) mit einem komplementär ausgebildeten Anschlussstück einer Wasserversorgungsleitung, insbesondere eines Eckventils, ausgebildet ist.

3. Druckschlauch (1) nach Anspruch 1 oder 2, **dadurch gekennzeichnet, dass** der Innenschlauch (2) im Wesentlichen über seine gesamte Länge von einer Ummantelung (7), vorzugsweise einem Metallgeflecht, besonders bevorzugt einem Edelstahlgeflecht, umgeben ist.

4. Druckschlauch (1) nach Anspruch 3, **dadurch gekennzeichnet, dass** die Ummantelung (7) an wenigstens einem Schlauchende (3, 5) von außen mittels eines Klemmenelements (8), vorzugsweise einer Presshülse, auf den Innenschlauch (2) aufgepresst ist.

5. Druckschlauch (1) nach einem der vorhergehenden Ansprüche, **dadurch gekennzeichnet, dass** das Anschlussstück (4, 6), insbesondere das erste Anschlussstück (4), umfangseitig wenigstens eine umlaufende Aufnahmenut (9) zur Aufnahme eines Dichtungselements (10), insbesondere eines Dichtrings, aufweist.

6. Druckschlauch (1) nach einem der vorhergehenden Ansprüche, **dadurch gekennzeichnet, dass** das Anschlussstück (4, 6), insbesondere das zweite Anschlussstück (6), umfangseitig wenigstens eine radial vorspringende Schulter (11) aufweist, vorzugsweise wobei die Schulter (11) einen Axialanschlag für ein Spannelement, vorzugsweise eine Überwurfmutter, bildet.

7. Druckschlauch (1) nach einem der vorhergehenden Ansprüche, **dadurch gekennzeichnet, dass** das Anschlussstück (4, 6), insbesondere das zweite Anschlussstück (6), stirnseitig einen umlaufenden Halte- und/oder Aufnahmebereich (12) zum Halten und/oder zur Aufnahme eines Dichtungselements (13), insbesondere eines Dichtrings, aufweist.

8. Druckschlauch (1) nach einem der vorhergehenden Ansprüche, **dadurch gekennzeichnet, dass** das Anschlussstück (4, 6) innenseitig in axialer Richtung zumindest bereichsweise, vorzugsweise vollständig, wellenfrei ausgebildet ist.

9. Verfahren zur Herstellung eines Druckschlauchs (1) für ein wasserführendes System zum Anschließen von Sanitär- und/oder Küchenarmaturen nach einem der Ansprüche 1 bis 8, wobei ein vorzugsweise gewellter Innenschlauch (2) und wenigstens ein abweichend zum Innenschlauch (2) ausgebildetes Anschlussstück (4, 6) zur Verbindung des Druckschlauches (1) mit einem komplementär ausgebildeten Anschlussstück einer Sanitärarmatur einstückig und durch Extrusion in einem gemeinsamen Extrusionsprozess hergestellt werden.

## Claims

1. Pressure hose (1) for a water-carrying system for connecting sanitary fittings, having a preferably corrugated inner hose (2) made of plastic, at least one hose end (3, 5) of the pressure hose (1) being provided with a connecting piece (4, 6), which is formed differently from the inner hose (2), for connecting the pressure hose (1) to a complementarily formed connection piece of a sanitary tap for fitting, **characterized in that** the inner hose (2) and the connection piece (4, 6) are formed in one piece and are produced by extrusion in a common extrusion process.

2. Pressure hose (1) according to claim 1, **characterized in that** both hose ends (3, 5) are provided with differently configured connection pieces (4, 6), a first connection piece (4) being used to connect a first hose end (3) to a complementarily configured connection piece of a tap for fitting, in particular a sanitary and/or kitchen tap for fitting, and a second, preferably differently configured, connection piece (6) being configured for connecting a second hose end (5) to a complementarily configured connection piece of a water supply line, in particular an angle valve.

3. Pressure hose (1) according to claim 1 or 2, **characterized in that** the inner hose (2) is surrounded substantially over its entire length by a sheathing (7), preferably a metal braiding, particularly preferably a stainless steel braiding.

4. Pressure hose (1) according to claim 3, **characterized in that** the sheathing (7) is pressed onto the inner hose (2) from the outside at at least one hose end (3, 5) by means of a clamping element (8), preferably a press sleeve.

5. Pressure hose (1) according to one of the preceding claims, **characterized in that** the connecting piece (4, 6), in particular the first connecting piece (4), comprises on the circumferential side at least one circumferential receiving groove (9) for receiving a sealing element (10), in particular a sealing ring.

6. Pressure hose (1) according to one of the preceding claims, **characterized in that** the connecting piece (4, 6), in particular the second connecting piece (6), comprises circumferentially at least one radially projecting shoulder (11), preferably wherein the shoulder (11) forms an axial stop for a tensioning element, preferably a union nut.

7. Pressure hose (1) according to one of the preceding claims, **characterized in that** the connecting piece (4, 6), in particular the second connecting piece (6), has on the end face a circumferential holding and/or receiving region (12) for holding and/or receiving a sealing element (13), in particular a sealing ring.

8. Pressure hose (1) according to one of the preceding claims, **characterized in that** the connecting piece (4, 6) is configured to be corrugation-free on the inside in the axial direction at least in sections, preferably completely.

9. Method for producing a pressure hose (1) for a water-carrying system for connecting sanitary and/or kitchen fittings according to one of claims 1 to 8, wherein a preferably corrugated inner hose (2) and at least one connecting piece (4, 6) formed differently from the inner hose (2) for connecting the pressure hose (1) to a complementarily formed connecting piece of a sanitary tap or fitting are produced in one piece and by extrusion in a common extrusion process.

## Revendications

1. Tuyau flexible à pression (1) pour un système d'acheminement d'eau pour raccorder des appareils sanitaires à un tuyau flexible interne (2) de préférence ondulé en matière plastique, dans lequel au moins une extrémité de tuyau flexible (3, 5) du tuyau flexible à pression (1) est pourvue d'une pièce de raccordement (4, 6) réalisée de manière à dériver vers le tuyau flexible interne (2) pour relier le tuyau flexible à pression (1) à une pièce de raccordement d'un appareil sanitaire réalisée de manière complémentaire, **caractérisé en ce que** le tuyau flexible interne (2) et la pièce de raccordement (4, 6) sont réalisés d'un seul tenant et sont fabriqués par extrusion dans un processus d'extrusion commun.

2. Tuyau flexible à pression (1) selon la revendication 1, **caractérisé en ce que** les deux extrémités de tuyau flexible (3, 5) sont pourvues de pièces de raccordement (4, 6) réalisées différemment, dans lequel une première pièce de raccordement (4) est réalisée pour relier une première extrémité de tuyau flexible (3) à une pièce de raccordement réalisée de manière complémentaire d'un appareil, en particulier d'un appareil sanitaire et/ou d'un appareil de cuisine, et une deuxième pièce de raccordement (6) réalisée de préférence autrement est réalisée pour relier une deuxième extrémité de tuyau flexible (5) à une pièce de raccordement, réalisée de manière complémentaire, d'une conduite d'alimentation en eau, en particulier d'un robinet d'équerre.

3. Tuyau flexible à pression (1) selon la revendication 1 ou 2, **caractérisé en ce que** le tuyau flexible interne (2) est entouré sensiblement sur la totalité de sa longueur par une gaine (7), de préférence un treillis métallique, de manière particulièrement préférée un treillis en acier inoxydable.

4. Tuyau flexible à pression (1) selon la revendication 3, **caractérisé en ce que** la gaine (7) est appliquée par pression sur le tuyau flexible interne (2) sur au moins une extrémité de tuyau flexible (3, 5) depuis l'extérieur au moyen d'un élément de serrage (8), de préférence d'un manchon de compression.

5. Tuyau flexible à pression (1) selon l'une quelconque des revendications précédentes, **caractérisé en ce que** la pièce de raccordement (4, 6), en particulier la première pièce de raccordement (4), présente côté périphérie au moins une rainure de logement (9) s'étendant en périphérie destinée à loger un élément d'étanchéité (10), en particulier une bague d'étanchéité.

6. Tuyau flexible à pression (1) selon l'une quelconque des revendications précédentes, **caractérisé en ce que** la pièce de raccordement (4, 6), en particulier la deuxième pièce de raccordement (6), présente côté périphérie au moins un épaulement (11) faisant saillie radialement, de préférence, dans lequel l'épaulement (11) forme une butée axiale pour un élément de serrage, de préférence un écrou d'accouplement.

7. Tuyau flexible à pression (1) selon l'une quelconque des revendications précédentes, **caractérisé en ce que** la pièce de raccordement (4, 6), en particulier la deuxième pièce de raccordement (6), présente côté frontal une zone de maintien et/ou de logement (12) s'étendant en périphérie, destinée à maintenir et/ou à loger un élément d'étanchéité (13), en particulier une bague d'étanchéité.

8. Tuyau flexible à pression (1) selon l'une quelconque des revendications précédentes, **caractérisé en ce que** la pièce de raccordement (4, 6) est réalisée côté interne dans la direction axiale au moins par endroits, de préférence en totalité, sans ondulation.

9. Procédé de fabrication d'un tuyau flexible à pression (1) pour un système d'acheminement d'eau pour raccorder des appareils sanitaires et/ou de cuisine selon l'une quelconque des revendications 1 à 8, dans lequel un tuyau flexible interne (2) de préférence ondulé et au moins une pièce de raccordement (4, 6) réalisée de manière à dériver vers le tuyau flexible interne (2) sont fabriqués d'un seul tenant pour relier le tuyau flexible à pression (1) à une pièce de raccordement, réalisée de manière complémentaire, d'un appareil sanitaire et par extrusion dans un procédé d'extrusion commun.
